(19) Europäisches Patentamt
European Patent Office
Office européen des brevets

(11) **EP 1 913 780 B1**

(12) **EUROPÄISCHE PATENTSCHRIFT**

(45) Veröffentlichungstag und Bekanntmachung des Hinweises auf die Patenterteilung:
**07.07.2010 Patentblatt 2010/27**

(21) Anmeldenummer: **06777694.8**

(22) Anmeldetag: **11.07.2006**

(51) Int Cl.:
**H04N 7/26** (2006.01)

(86) Internationale Anmeldenummer:
**PCT/EP2006/064094**

(87) Internationale Veröffentlichungsnummer:
**WO 2007/054382 (18.05.2007 Gazette 2007/20)**

(54) **VERFAHREN ZUM KORRIGIEREN EINES QUANTISIERTEN DATENWERTS SOWIE EINE DAZUGEHÖRIGE VORRICHTUNG**

METHOD FOR CORRECTING A QUANTISED DATA VALUE AND ASSOCIATED DEVICE

PROCEDE POUR LA CORRECTION DE DONNEES QUANTIFIEES ET DISPOSITIF ASSOCIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.08.2005 DE 102005038295**

(43) Veröffentlichungstag der Anmeldung:
**23.04.2008 Patentblatt 2008/17**

(73) Patentinhaber: **SIEMENS AKTIENGESELLSCHAFT**
**80333 München (DE)**

(72) Erfinder:
- **BIALKOWSKI, Jens-Günter**
  **90425 Nürnberg (DE)**
- **KAUP, André**
  **91090 Effeltrich (DE)**

(56) Entgegenhaltungen:
**US-B1- 6 208 688**

- **SORIAL H ET AL: "Selective requantization for transcoding of MPEG compressed video" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30. Juli 2000 (2000-07-30), Seiten 217-220, XP010511439 ISBN: 0-7803-6536-4**

- **KADONO S ET AL: "OPTIMIZATION OF REQUANTIZATION PARAMETER FOR MPEG TRANSCODING" SYSTEMS & COMPUTERS IN JAPAN, WILEY, HOBOKEN, NJ, US, Bd. 33, Nr. 9, August 2002 (2002-08), Seiten 21-30, XP001116225 ISSN: 0882-1666**

- **KEESMAN G ET AL: "Transcoding of MPEG bitstreams" SIGNAL PROCESSING. IMAGE COMMUNICATION, ELSEVIER SCIENCE PUBLISHERS, AMSTERDAM, NL, Bd. 8, Nr. 6, September 1996 (1996-09), Seiten 481-500, XP004047113 ISSN: 0923-5965**

- **BIALKOWSKI J ET AL: "Fast transcoding of intra frames between H.263 and H.264" IMAGE PROCESSING, 2004. ICIP '04. 2004 INTERNATIONAL CONFERENCE ON SINGAPORE 24-27 OCT. 2004, PISCATAWAY, NJ, USA,IEEE, 24. Oktober 2004 (2004-10-24), Seiten 2785-2788, XP010786366 ISBN: 0-7803-8554-3**

- **OLIVER WERNER: "Requantization for Transcoding of MPEG-2 Intraframes" IEEE TRANSACTIONS ON IMAGE PROCESSING, IEEE SERVICE CENTER, PISCATAWAY, NJ, US, Bd. 8, Nr. 2, Februar 1999 (1999-02), XP011026281 ISSN: 1057-7149**

- **VETRO A ET AL: "VIDEO TRANSCODING ARCHITECTURES AND TECHNIQUES: AN OVERVIEW" IEEE SIGNAL PROCESSING MAGAZINE, IEEE SERVICE CENTER, PISCATAWAY, NJ, US, Bd. 20, Nr. 2, März 2003 (2003-03), Seiten 18-29, XP011093783 ISSN: 1053-5888**

- **WEN-NUNG LIE ET AL: "Rate-distortion optimized DCT-domain video transcoder for bit-rate reduction of MPEG videos" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, Bd. 5, 17. Mai 2004 (2004-05-17), Seiten 969-972, XP010719092 ISBN: 0-7803-8484-9**
- **BIALKOWSKI, J. BARKOWSKY, M. KAUP, A.: "On Requantization in Intra-Frame Video Transcoding with Different Transform Block Sizes" MULTIMEDIA SIGNAL PROCESSING, 2005 IEEE 7TH WORKSHOP ON DOI:10.1109/MMSP. 2005.248669, Oktober 2005 (2005-10), Seiten 1-4, XP002418239**

- **BIALKOWSKI, J. BARKOWSKY, M. KAUP, A.: "Overview of Low-Complexity Video Transcoding from H.263 to H.264" MULTIMEDIA AND EXPO, 2006 IEEE INTERNATIONAL CONFERENCE DOI:10.1109/ICME.2006.262547, Juli 2006 (2006-07), Seiten 49-52, XP002418240**

**Beschreibung**

Die Erfindung betrifft ein Verfahren zum Korrigieren eines quantisierten Datenwerts gemäß dem Oberbegriff des Anspruchs 1 und eine dazugehörige Vorrichtung gemäß dem Oberbegriff des Anspruchs 11.

Bei einer Transcodierung quantisierter digitaler Signale, wie beispielsweise eines Videosignals, wird ein digitales Eingangssignal in ein neues digitales Ausgangssignal umgewandelt. Ein Verfahren zur Transcodierung kann zur Anpassung des Eingangssignals an unterschiedliche Übertragungsanforderungen und/oder verschiedene Endgerätefunktionalitäten genutzt werden. Dabei kann die Anpassung einer Datenrate des Eingangssignals mittels Neuquantisierung erfolgen. Komplexere Verfahren zur Transcodierung verändern weitere Parameter, wie zum Beispiel eine Bildwiederholrate oder eine Bildauflösung im Falle der Transcodierung eines Videosignals.

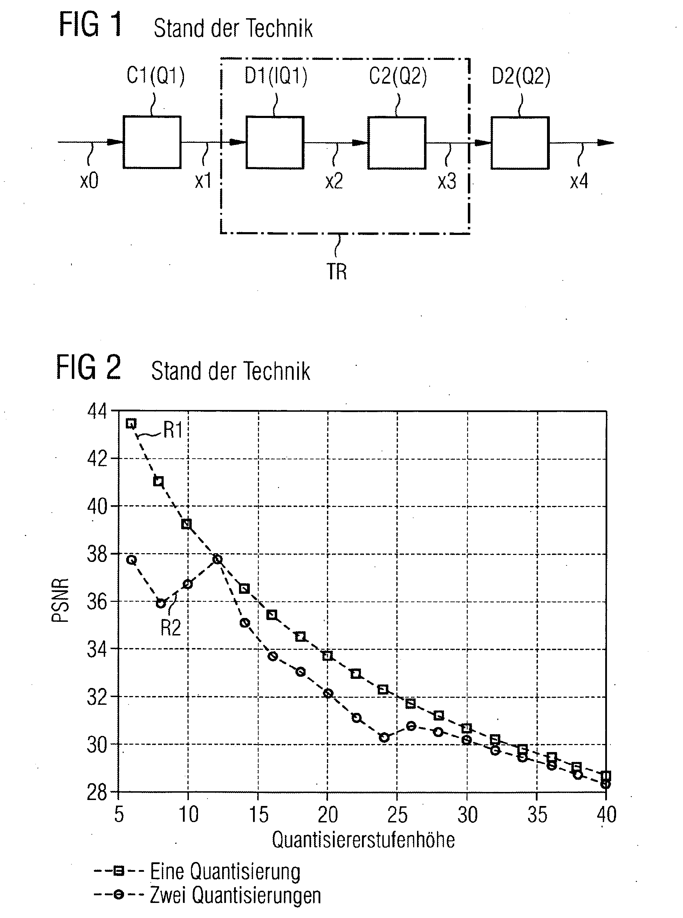

Mit Hilfe von Figur 1 wird beispielhaft eine Codierkette, die die Transcodierung digitaler Signale umfasst, näher erläutert. Ein uncodiertes Bildsignal weist eine Vielzahl von Helligkeits- und Farbwerten auf, die z.B. im Spektralbereich bearbeitet werden. Diese uncodierten Werte werden als uncodierte Datenwerte X0 bezeichnet.

Ein uncodierter Datenwert X0, d.h. ein Eingangsdatenwert X0, wird in einem ersten Coder C1 zu einem ersten Zwischendatenwert X1 codiert. Die Codierung erfolgt mit Hilfe einer ersten Quantisierung Q1. Der erste Zwischendatenwert X1 wird unter Verwendung des ersten Decoders D1 in den zweiten Zwischendatenwert X2 decodiert. Hierbei wird eine erste inverse Quantisierung IQ1 durchgeführt. Der zweite Zwischendatenwert X2 entspricht bis auf einen Quantisierungsfehler dem uncodierten Datenwert X0. Dieser zweite Zwischendatenwert X2 wird mit Hilfe eines zweiten Coders C2 in einen dritten Zwischendatenwert X3 codiert. Zur Codierung verwendet der zweite Coder C2 eine zweite Quantisierung Q2. Anschließend wird der dritte Zwischendatenwert X3 unter Verwendung eines zweiten Decoders D2 in einen Enddatenwert X4 decodiert. Die Decodierung erfolgt im zweiten Decoder D2 unter Einsatz einer zweiten inversen Quantisierung IQ2. Der Enddatenwert X4 entspricht bis auf einen Quantisierungsfehler dem uncodierten Datenwert X0, wobei dieser Quantisierungsfehler sowohl durch die erste Quantisierung Q1 bzw. ersten inversen Quantisierung IQ1 und die zweite Quantisierung Q2 bzw. zweite inverse Quantisierung IQ2 verursacht wird.

Wird beispielsweise ein Videoverteildienst betrachtet, so werden für eine Vielzahl von Bildern eines Videos, die eine Vielzahl von uncodierten Datenwerten X0 umfassen, mit Hilfe des ersten Coders eine Vielzahl von ersten Zwischendatenwerten X1 erzeugt. Diese ersten Zwischendatenwerte X1 werden beispielsweise auf einer Festplatte für eine spätere Übermittlung zu einem Endgerät organisiert abgelegt. Um einem Endgerät die Bilder des Videos in geeigneter Form, z.B. mit einer niedrigen Datenrate, zu übertragen, können die ersten Zwischendatenwerte X1 mit Hilfe des ersten Decoders in die zweiten Zwischendatenwerte X2 decodiert werden. In einem nachfolgenden Schritt werden die zweiten Zwischendatenwerte X2 unter Verwendung des zweiten Coders in die dritten Zwischendatenwerte X3 codiert und können anschließend in dieser Form an das gewünschte Endgerät übermittelt werden. Das Endgerät empfängt die dritten Zwischendatenwerte X3, decodiert diese mit Hilfe des zweiten Decoders D2 und stellt die decodierten Enddatenwerte X4 bspw. auf einem Bildschirm dar. In Figur 1 wird mit Hilfe des ersten Decoders und des zweiten Coders eine Transcodiereinheit TR beschrieben, welche bspw. eine Reduktion der Datenrate in Form einer Umcodierung der ersten Zwischendatenwerte X1 (=Eingabesignal) in die dritten Zwischendatenwert X3 (=Ausgabesignal) vornimmt.

Digitale Signale, wie z.B. digitale Videosignale, werden zur Übertragung mit Hilfe von bekannten Codierstandards, zum Beispiel MPEG4 (MPEG - Motion Picture Expert Group) oder H.264, codiert bzw. komprimiert. Diese Codierstandards bzw. Videocodierverfahren zerlegen das Videosignal in Blöcke und setzen eine Bewegungskompensation zur prädiktiven Codierung ein. Die einzelnen Blöcke werden dabei mittels einer mathematischen Abbildung in Spektralanteile zerlegt. Zur besseren Kompression werden die Spektralanteile quantisiert, wobei aus dem Signal Anteile entfernt werden, die für einen Betrachter nicht oder nur geringfügig erkennbar sind. Diese entfernten Anteile sind auch innerhalb des Transcoders nicht mehr verfügbar oder wiederherstellbar.

Das Entfernen von Signalanteilen führt dazu, dass bei einer zusätzlichen Neuquantisierung innerhalb des Transcoders mit Hilfe der zweiten Quantisierung Q2 durch eine hohe Quantisiererstufehöhe zusätzliche Quantisierungsverluste bzw. Quantisierungsfehler auftreten. Das bedeutet, dass durch das Anwenden der ersten und zweiten Quantisierung höhere Quantisierungsfehler entstehen als bei Verwendung eines einzigen Quantisierers. Ein durch die Transcodierung auftretender Qualitätsverlust aufgrund der Neuquantisierung führt zu einer sichtbaren Verschlechterung der Bildqualität.

In Figur 2 ist eine Bildqualität in PSNR (PSNR - Peak Signal To Noise Ratio) über der Quantisiererstufenhöhe bei Verwendung von einem und zwei Quantierungen bei Verwendung in einem Videocodierverfahren exemplarisch zu sehen. Die Quantisiererstufenhöhe gibt eine Anzahl von Amplituden von Datenwerten an, die innerhalb eines Quantisierungsintervalls zu einem Rekonstruktionswert zusammengefasst werden. Beispielsweise werden bei einer Quantisierstufenhöhe von 15 jeweils die Amplituden von 0 bis 14 oder von 15 bis 29, usw. jeweils einem Rekonstruktionswert, z.B. 7, 23, usw., zusammengefasst. Je größer die Quantisiererstufenhöhe ist, desto stärker wird durch die Quantisierung komprimiert. Die mit Quadraten gekennzeichnete Kurve ist eine erste Referenzkurve R1 und beschreibt die Bildqualität bei Verwendung eines einzigen Quantisierers, wobei mit der in Figur 1 angegeben Quantisierstufenhöhe quantisiert wurde. Eine zweite Referenzkurve R2, gekennzeichnet mit Kreisen, zeigt die Bildqualität bei Verwendung von zwei nacheinander geschalteten Quantisierungsstufen gemäß Figur 1, wobei in der ersten Quantisierung Q1 mit einer ersten Quantisiererstufenhöhe von 12 und in der zweiten Quantisierung Q2 mit der in Figur 2 angegeben Quantisierstufenhöhe z.B. 20 quantisiert wurde. Dabei ist deutlich zu erkennen, dass die zweite Referenzkurve unterhalb der ersten Referenzkurve liegt. So ist der Unterschied der Bildqualität PSNR bei der Quantisierstufenhöhe von 20 ca. 2 dB (dB - Dezibel). Dies heißt, dass bei Verwendung von mehr als einer Quantisierung die Bildqualität gegenüber der Verwendung einer einzigen Quantisierung signifikant reduziert wird.

Heute gebräuchliche Videotranscoder bestehen üblicherweise aus einer Hintereinanderschaltung eines Decoders und eines Coders. Einen guten Überblick erhält man aus dem Dokument [1]. Der Decoder decodiert das Eingabesignal entweder vollständig oder bis zu einem bestimmten Grad, wobei zumindest die Amplituden der Spektralkoeffizienten aus den quantisierten Werten berechnet werden, um anschließend eine Neuquantisierung vornehmen zu können. Es können auch zur Reduktion der Komplexität sowohl diese decodierten Datenwerte als auch Seiteninformationen, wie zum Beispiel Prädiktionsmodi und/oder Bewegungsvektoren, an den zweiten Coder übergeben werden. Im zweiten Coder kann dann die Ratenadaption durch Neuquantisierung mit einer höheren Quantisiererstufenhöhe als in der ersten Quantisierung Q1 vorgenommen werden. In [2] wird dazu ein Verfahren vorgestellt, das die Quantisierung bezüglich der Koeffizienten der Eingabedatenwerte und der zusätzlich erzeugten Drift einstellt. Aus [3], [4] sind Verfahren bekannt, die zur Einstellung der Neuquantisierung einen Lagrange-Ansatz verwenden, bei dem die Quantisierung so gewählt wird, dass die Verzerrung bezüglich einer vorgegebenen Rate minimal ist. Auf eine Wahl eines neuen Rekonstruktionswertes wird hierbei jedoch nicht eingegangen.

In einem Dokument (Sorial H et al: "Selective requantization for transcoding of MPEG compressed video" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA, IEEE, US, 30.Juli 2000 (2000-07-30), Seiten 217-220) wird eine Methode zur Reduzierung von Quantisierungsfehlern bei einer Transcodierung beschrieben.

Der Erfindung liegt die Aufgabe zugrunde, ein Verfahren und eine Vorrichtung anzugeben, welche bei einer Transcodierung, insbesondere im Rahmen einer Bildcodierung, mit zwei Quantisierern einen Quantisierungsfehler in einfacher Weise reduziert.

Diese Aufgabe wird gelöst durch die Merkmale des Anspruchs 1 bzw. die Merkmale des Anspruchs 11.

Weiterbildungen dieses Verfahrens bzw. Vorrichtung werden durch die Unteransprüche wiedergegeben.

Die Erfindung betrifft ein Verfahren zum Korrigieren eines quantisierten Datenwerts, wobei der quantisierte Datenwert durch eine erste Quantisierung eines Eingangsdatenwerts, gefolgt von einer ersten inversen Quantisierung und anschließend durch eine zweite Quantisierung erzeugt wird, und eine erste Quantisierung erste Quantisierungsintervalle und die zweite Quantisierung zweite Quantisierungsintervalle aufweisen, bei dem durch Verschieben von Intervallgrenzen der zweiten Quantisierungsintervalle jeweils zu den nächstgelegenen Intervallgrenzen der ersten Quantisierungsintervalle dritte Quantisierungsintervalle generiert werden, bei dem für die dritten Quantisierungsintervalle jeweils ein dritter Rekonstruktionswert derart festgelegt wird, dass sich der dritte Rekonstruktionswert innerhalb des dazugehörigen dritten Quantisierungsintervalls befindet, bei dem ein korrigierter Datenwert durch eine dritte inverse Quantisierung des quantisierten Datenwerts generiert wird, wobei die dritte inverse Quantisierung durch die dritten Quantisierungsintervalle mit den dazugehörigen dritten Rekonstruktionswertes gebildet wird.

Durch das erfindungsgemäße Verfahren wird erreicht, dass der Quantisierungsfehler reduziert wird, wobei die Ermittlung der dritten Quantisierungsintervalle und der dritten Rekonstruktionswerte mit einem geringen Rechenaufwand durchgeführt werden kann.

Ferner kann das erfindungsgemäße Verfahren für gleich große und unterschiedlich große Intervalle der ersten und/oder zweiten (inversen) Quantisierung angewandt werden.

Des Weiteren kann das erfindungsgemäße Verfahren im Rahmen einer Decodierung in einem Endgerät und/oder in einer Transcodiereinheit verwendet werden.

Wird vorzugsweise der dritte Rekonstruktionswert des dritten Quantisierungsintervalls aus zumindest einem derjenigen ersten Rekonstruktionswerte der jeweiligen ersten Quantisierungsintervalle generiert, die sich innerhalb des betrachteten dritten Quantisierungsintervalls befinden, so kann der dritte Rekonstruktionswert in einfacher Weise ermittelt werden.

Wird in einer alternativen Ausführungsform der dritte Rekonstruktionswert durch einen gewichteten Mittelwert aus zwei benachbarten ersten Rekonstruktionswerten erzeugt, so können individuelle Eigenschaften, wie z.B. eine Häufigkeitsverteilung des Auftritts der ersten Rekonstruktionswerte, der jeweiligen ersten Rekonstruktionswerte bei der Generierung des dritten Rekonstruktionswerts berücksichtigt werden.

Vorzugsweise wird der dritte Rekonstruktionswert derart generiert wird, dass sich der dritte Rekonstruktionswert in der Mitte des dazugehörigen dritten Quantisierungsintervalls befindet. Somit ist der dritte Rekonstruktionswert in einer besonders einfachen Weise und mit einer sehr geringen Komplexität ermittelbar.

In einer vorzugsweisen Erweiterung wird der dritte Rekonstruktionswert des dritten Quantisierungsintervals derart generiert, dass auf Basis einer relativen Häufigkeitsverteilung von Datenwerten, insbesondere von Datenwerten nach der ersten inversen Quantisierung, der am häufigst vorkommende Datenwert dem dritten Rekonstruktionswert zugewiesen wird. Damit wird der Quantisierungsfehler weiter reduziert.

Vorzugsweise wird dem dritten Rekonstruktionswert des dritten Quantisierungsintervalls derjenige Datenwert innerhalb des dritten Quantisierungsintervalls zugewiesen, der im Mittel den geringsten Quantisierungsfehler unter Berücksichtigung der relativen Häufigkeitsverteilung von Datenwerten erzielt, so wird der Quantisierungsfehler zusätzlich reduziert und somit die Bildqualität sichtbar erhöht.

Wird die dritte inverse Quantisierung derart ausgeführt, dass ein Zwischenwert durch die zweite inverse Quantisierung des quantisierten Datenwerts erzeugt und dieser erzeugte Zwischenwert durch denjenigen dritten Rekonstruktionswert ersetzt wird, der im selben dritten Quantisierungsintervall wie der erzeugte Zwischenwert liegt, so kann das erfindungsgemäße Verfahren in einfacher Weise in ein bestehendes Verfahren integriert werden. Denn die Zuweisung der dritten Rekonstruktionswerte erfolgt nach der zweiten inversen Quantisierung, wodurch lediglich ein Umsetzen der zweiten Rekonstruktionswerte in die dritten Rekonstruktionswerte erforderlich ist. Ein Ersetzen von bestehenden Komponenten des bestehenden Verfahrens, wie z.B. die zweite inverse Quantisierung, ist dabei nicht erforderlich.

Vorzugsweise wird das Verfahren zur Korrektur im Rahmen eines Decodierverfahrens, insbesondere eines Bilddecodierverfahrens, auf diejenigen quantisierten Datenwerte angewandt, die zur Verarbeitung anderer quantisierter Datenwerte unberücksichtigt bleiben. Dadurch wird eine einwandfreie Decodierung, z.B. in einem Endgerät, ermöglicht und gleichzeitig eine Reduktion des Quantisierungsfehlers und somit eine Verbesserung der Bildqualität erreicht.

In einer alternativen Erweiterung wird das Verfahren zur Korrektur vorzugsweise im Rahmen eines Decodierverfahrens, insbesondere eines Bilddecodierverfahrens, erst dann auf die quantisierten Datenwerte angewandt, nachdem diese zur Verarbeitung anderer quantisierter Datenwerte unberücksichtigt bleiben. Damit kann das erfindungsgemäße Verfahren auch in Decodierverfahren eingesetzt werden, die eine prädiktive Codierung vornehmen.

Wird vorzugsweise das Verfahren zur Korrektur im Rahmen eines Transcodierverfahrens mit einem ersten Decoder und einem zweiten Coder in einer Rückkoppelschleife des zweiten Coders eingesetzt, so kann auch für einen Transcoder das erfindungsgemäße Verfahren benutzt werden. Dadurch ergibt sich eine Verbesserung der Bildqualität.

Ferner betrifft die Erfindung eine Vorrichtung zum Korrigieren eines quantisierten Datenwerts, wobei der quantisierte Datenwerte durch eine erste Quantisierung eines Eingangsdatenwerts, gefolgt von einer ersten inversen Quantisierung und anschließend durch eine zweite Quantisierung erzeugt wird, und eine erste Quantisierung erste Quantisierungsintervalle und die zweite Quantisierung zweite Quantisierungsintervalle aufweisen, bei dem ein erstes Mittel derart ausgestaltet ist, dass durch Verschieben von Intervallgrenzen der zweiten Quantisierungsintervalle jeweils zu den nächstgelegenen Intervallgrenzen der ersten Quantisierungsintervalle dritte Quantisierungsintervalle generiert werden, ein zweites Mittel derart ausgestaltet ist, dass für die dritten Quantisierungsintervalle jeweils ein dritter Rekonstruktionswert derart festgelegt wird, dass sich der dritte Rekonstruktionswert innerhalb des dazugehörigen dritten Quantisierungsintervalls befindet, und ein drittes Mittel derart ausgestaltet ist, dass ein korrigierter Datenwert durch eine dritte inverse Quantisierung des quantisierten Datenwerts generiert wird, wobei die dritte inverse Quantisierung durch die dritten Quantisierungsintervalle mit den dazugehörigen dritten Rekonstruktionswertes gebildet wird. Durch die erfindungsgemäße Vorrichtung ist das erfindungsgemäße Verfahren implementierbar und ausführbar.

Vorzugsweise ist ein viertes Mittel derart ausgestaltet, dass das vierte Mittel Erweiterungen des erfindungsgemäßen Verfahrens ausführt. Mit Hilfe des vierten Mittels sind Erweiterungen und Varianten des erfindungsgemäßen Verfahrens implementierbar und durchführbar.

Im Folgenden werden Beispiele der Erfindung anhand der Zeichnung näher erläutert. Im Einzelnen zeigen:

Figur 1     eine Vorrichtung zum Generieren eines Ausgangsda- tenwertes aus einem Eingangsdatenwert unter Verwen- dung von zwei Quantisierungsstufen;

Figur 2     einen Vergleich der Bildqualität bei Verwendung ei- ner einzigen und zwei Quantisierungsstufen;

Figur 3     ein Ausführungsbeispiel des erfindungsgemäßen Ver- fahrens;

Figur 4     eine Zuordnung von dritten Intervallgrenzen und dritten Rekonstruktionswerten;

Figur 5     einen Vergleich einer Bildqualität bei Verwendung einer einzigen Quantisierungsstufe, zwei Quantisie- rungsstufen und zwei Quantisierungsstufen unter Be- rücksichtigung des erfindungsgemäßen Verfahrens;

Figur 6     eine erfindungsgemäße Vorrichtung zur Durchführung des erfindungsgemäßen Verfahrens;

Figur 7     Verwendung der Vorrichtung im Rahmen eines Stand- bilddecodierverfahrens;

Figur 8     Verwendung des erfindungsgemäßen Verfahrens im Rah- men einer Transcodiereinrichtung;

Figur 9   Ermittlung des dritten Rekonstruktionswertes unter Berücksichtigung der relativen Häufigkeit von Da- tenwerten zur Minimierung eines Quantisierungsfeh- lers;

Figur 10   Vergleich der Bildqualität bei Verwendung des er- findungsgemäßen Verfahrens unter Berücksichtigung der Auswahl des dritten Rekonstruktionswertes mit- tels einer relativen Häufigkeit.

Elemente mit gleicher Funktion und Wirkungsweise sind in den Figuren mit den gleichen Bezugszeichen versehen.

Bei einer Transcodierung digitaler Signale, wie beispielsweise Videosignale oder Audiosignale, wird durch Verwendung von zwei Quantisierern eine Qualität eines Ausgabesignalen bzw. von Enddatenwerten X4 erheblich reduziert. Dies ist bereits in der Beschreibungseinleitung anhand der Figuren 1 und 2 näher dargestellt worden, so dass darauf im Folgenden nicht näher eingegangen wird. Im nachfolgenden Ausführungsbeispiel wird das erfindungsgemäße Verfahren anhand eines Videosignals näher erläutert. Das erfindungsgemäße Verfahren bzw. die erfindungsgemäße Vorrichtung können jedoch nicht nur für Videosignale, sondern für jede Art von Signalen verwendet werden, bei denen im Rahmen einer Transcodierung eine inverse Quantisierung und eine nachgeschaltete neue Quantisierung stattfindet. Dies ist beispielsweise bei der Codierung von Sprachsignalen, Musiksignalen oder Standbildern gängig.

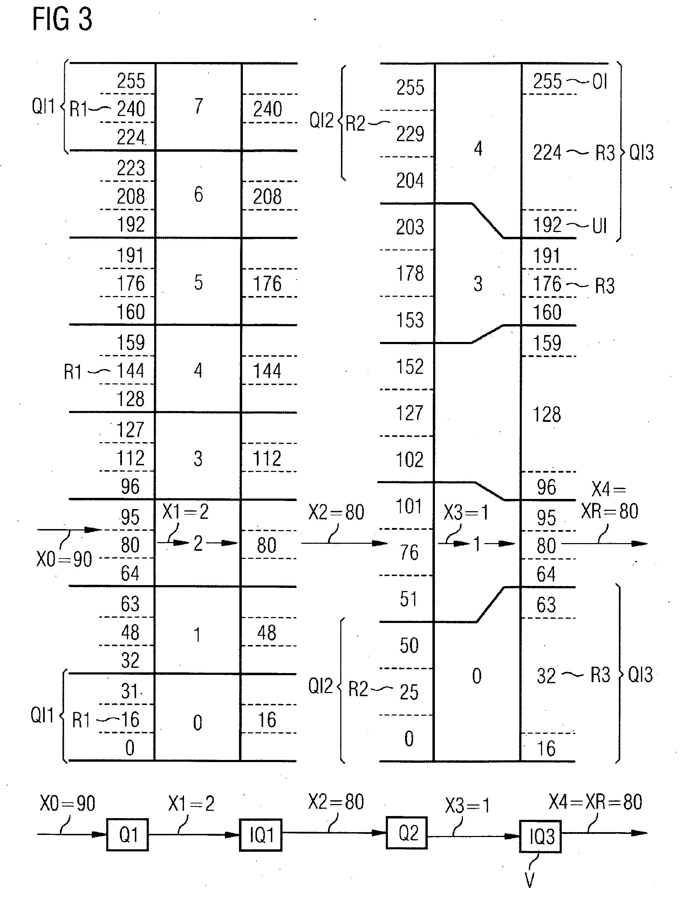

In Figur 3 wird auf das erfindungsgemäße Verfahren anhand eines konkreten Zahlenbeispiels näher eingegangen. Ein uncodierter Datenwert X0, d.h. ein Eingangsdatenwert X0, ist beispielsweise X0 = 90. Im Rahmen einer ersten Quantisierung Q1 wird ein Zahlenraum von 0 bis 255 in acht gleich große erste Quantisierungsintervalle QI1 aufgeteilt, d.h. eine erste Quantisiererstufenhöhe der ersten Quantisierung beträgt 32. In Figur 3 ist für jedes erste Quantisierungsintervall QI1 jeweils ein Wert an der unteren und an der oberen Intervallgrenze angegeben, sowie ein jeweils zum ersten Quantisierungsintervall zugehöriger erster Rekonstruktionswert R1. Dies ist analog für die zweiten und dritten Quantisierungsintervalle QI2, QI3 angegeben. Dieser erste Rekonstruktionswert R1, zum Beispiel 144, wird erreicht, wenn ein quantisierter Datenwert unter Verwendung einer ersten inversen Quantisierung IQ1 in den Zahlenraum von 0 bis 255 überführt wird. Im vorliegenden Beispiel wird der uncodierte Datenwert X0 = 90 in den Wert 2 quantisiert, das heißt ein erster Zwischendatenwert X1 = 2. Wird die erste inverse Quantisierung QI1 auf den ersten Zwischendatenwert X1 angewandt, so ergibt sich ein zweiter Zwischendatenwert X2 = 80, wobei dies dem ersten Rekonstruktionswert R1 = 80 des dazugehörigen ersten Quantisierungsintervalls QI1 entspricht.

Der zweite Zwischendatenwert X2 = 80 wird einer zweiten Quantisierung Q2 zugeführt. Hierbei ist der Zahlenraum von 0 bis 255 in fünf gleich große zweite Quantisierungsintervalle QI2 aufgeteilt, d.h. die Quantisiererstufenhöhe der zweiten Quantisierung beträgt 51. Analog zur ersten Quantisierung Q1 ist neben einem zweiten Rekonstruktionswert R2 jeweils ein Wert für die obere und untere Intervallgrenze eines jeden zweiten Quantisierungsintervalls QI2 angegeben. Der zweite Zwischendatenwert X2 = 80 wird durch die zweite Quantisierung Q2 in einen dritten Zwischendatenwert X3 = 1 quantisiert. Der dritte Zwischenwert X3 wird auch als quantisierter Datenwert X3 bezeichnet.

In einem nachfolgenden Schritt wird aus dem dritten Zwischendatenwert X3 ein korrigierter Datenwert XR unter Verwendung des erfindungsgemäßen Verfahrens gebildet. Dabei wird der dritte Zwischendatenwert X3 = 1 auf ein drittes Quantisierungsintervall QI3 mit den Intervallgrenzen 64 bis 95 abgebildet, wobei aufgrund einer dritten inversen Quantisierung IQ3 der dritte Zwischendatenwert X3 dem dritten Rekonstruktionswert R3 = 80 zugewiesen wird. Dieser dritte Rekonstruktionswert R3 = 80 entspricht dem korrigierten Datenwert XR. In Figur 3 sind in der rechten Hälfte die fünf dritten Quantisierungsintervalle QI3 abgebildet. Ferner ist jedem der dritten Quantisierungsintervalle QI3 jeweils ein dazugehöriger dritter Rekonstruktionswert R3, zum Beispiel R3 = 32 oder R3 = 224, zu sehen.

Zur Bildung der dritten Quantisierungsintervalle QI3 werden die Intervallgrenzen der zweiten Quantisierungsintervalle QI2 derart verschoben, dass diese jeweils den nächstgelegenen Intervallgrenzen der ersten Quantisierungsintervalle QI1 entsprechen. Wird beispielsweise das zweite Quantisierungsintervall QI2 von 204 bis 255 betrachtet, so entspricht die obere Intervallgrenze dieses zweiten Quantisierungsintervalls QI2 der Intervallgrenze einer der ersten Quantisierungsintervalle QI1. Die untere Intervallgrenze 204 liegt jedoch innerhalb der Intervallgrenzen 192 bis 223 eines der ersten Quantisierungsintervalle QI1. Somit wird diese Intervallgrenze 204 des zweiten Quantisierungsintervalls QI2 zur nächstgelegenen Intervallgrenze des ersten Quantisierungsintervalls QI1 mit der unteren Intervallgrenze 192 verschoben. Diese Vorgehensweise kann für alle zweiten oberen und unteren Intervallgrenzen angewendet werden, um damit die Intervallgrenzen der dritten Quantisierungsintervalle QI3 zu ermitteln.

Zum Festlegen der dritten Rekonstruktionswerte R3 kann jeweils ein Wert innerhalb des dritten Quantisierungsintervalls QI1 ausgewählt werden. So beträgt der dritte Rekonstruktionswert R3 des dritten Quantisierungsintervalls QI3 mit den Intervallgrenzen 192 bis 255 gleich R3 = 224. Im vorliegenden Ausführungsbeispiel gemäß Figur 3 sind die dritten Rekonstruktionswerte der jeweiligen dritten Quantisierungsintervalle QI3 in die Mitte des jeweiligen Quantisierungsintervalls QI3 gelegt worden, wobei durch Auf- bzw. Abrunden nur ganzzahlige Werte für die dritten Rekonstruktionswerte R3 zugelassen worden sind.

In Figur 3 sind die dritten Zwischenwerte X3 bspw. als Index zur Auswahl der dritten Rekonstruktionswerte R3 aus einer ersten Liste benutzt worden. Diese Liste lautet bspw.:

| X3 | 0 | 1 | 2 | 3 | 4 |
|---|---|---|---|---|---|
| R3 | 32 | 80 | 128 | 176 | 224 |

So wird bei dem dritten Zwischenwert X3=2 der dritte Rekonstruktionswert R3=128 gewählt.

In einer alternativen Ausführungsform wird nach der zweiten Quantisierung Q2 zunächst die zweite inverse Quantisierung IQ2 durchgeführt. Die daraus gewonnenen zweiten Rekonstruktionswerte R2, d.h. die vierten Zwischenwerte X4, können dann als Index für eine zweite Liste dienen, um daraus die dritten Rekonstruktionswerte zu ermitteln. Diese zweite Liste lautet beispielsweise:

| R2, X4 | 25 | 76 | 127 | 178 | 229 |
|---|---|---|---|---|---|
| R3 | 32 | 80 | 128 | 176 | 224 |

So wird bei dem zweiten Rekonstruktionswert R2=229 der dritte Rekonstruktionswert R3=224 ausgewählt. Die Vorgehensweise gemäß der ersten Liste hat den Vorteil, dass eine organisierte Speicherung und Bearbeitung der ersten Liste einfacher ist, da der Index der ersten Liste X3 von 0 bis 4 linear aufsteigend ist.

Das erfindungsgemäße Verfahren ist anhand von gleichgroßen ersten und zweiten Quantisierungsintervallen exemplarisch erläutert worden. Im Allgemeinen kann das erfindungsgemäße Verfahren auch bei unterschiedlich großen ersten und/oder zweiten Quantisierungsintervallen eingesetzt werden. Ferner kann das erfindungsgemäße Verfahren auch bei Quantisierungsintervallen benutzt werden, die anstelle positiver (Daten-)werte negative und/oder positive und negative (Daten-)werte umfassen.

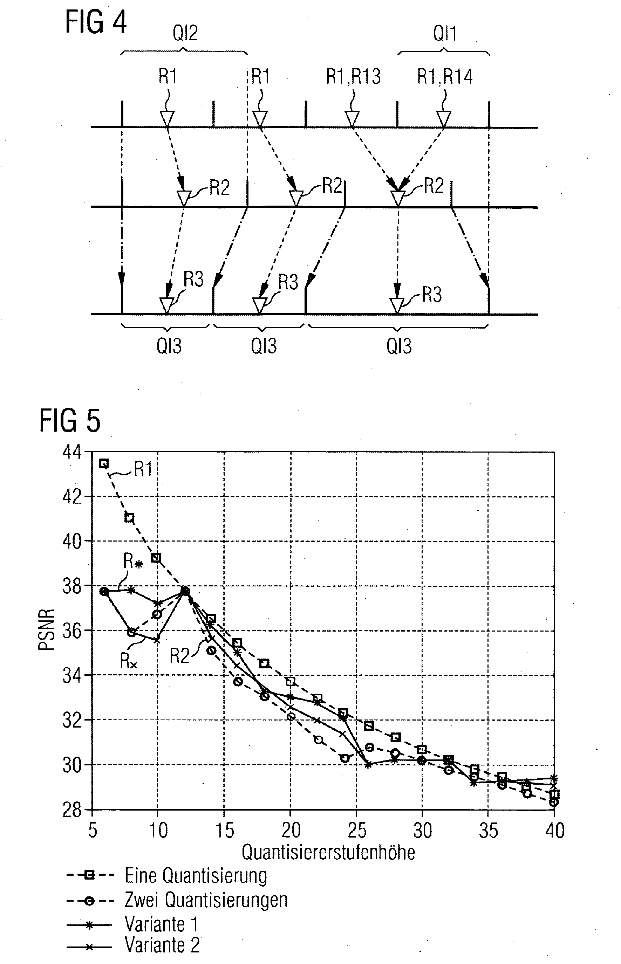

In Figur 4 ist das erfindungsgemäße Verfahren in einer alternativen Darstellungsform graphisch abgebildet. In der ersten Zeile sind mehrere erste Quantisierungsintervalle QI1 und die dazugehörigen ersten Rekonstruktionswerte R1 abgebildet. Darunter folgen in der zweiten Zeile die zweiten Quantisierungsintervalle QI2 und die dazugehörigen zweiten Rekonstruktionswerte R2, sowie in der dritten Zeile die dritte Quantisierungsintervalle QI3 und die dazugehörigen dritten Rekonstruktionswerte R3. Nach der inversen ersten Quantisierung IQ1 werden die ersten Rekonstruktionswerte R1 auf jeweils einen der zweiten Rekonstruktionswerte R2 abgebildet. Neben einer bijektiven Abbildung von R1 nach R2 können auch zwei oder mehrere, insbesondere benachbarte, erste Rekonstruktionswerte R1 auf einen einzigen zweiten Rekonstruktionswert R2 abgebildet werden.

Zur Bildung der dritten Quantisierungsintervalle QI3 werden die Intervallgrenzen der zweiten Quantisierungsintervalle QI2 derart verschoben, dass diese der zu ihnen nächstliegenden Intervallgrenze der ersten Quantisierung Q1 entsprechen. Ferner werden die dritten Rekonstruktionswerte R3 beispielsweise derart gebildet, dass ein Wert, der in der Mitte des jeweiligen dritten Quantisierungsintervalls QI3 liegt, ausgewählt wird. Wie sich gemäß Figur 4 zeigt, wird dadurch jeweils einem zweiten Rekonstruktionswert R2 ein dritter Rekonstruktionswert R3 zugewiesen. Neben der Verwendung von gleich großen ersten bzw. zweiten Quantisierungsintervallen QI1, QI2 ist das erfindungsgemäße Verfahren bzw. Vorrichtung auch einsetzbar, falls die ersten Quantisierungsintervalle QI1, und/oder zweiten Quantisierungsintervalle QI2 unterschiedlich große Intervalle aufweisen. Wie beispielsweise in Figur 4 zu sehen, sind die zweiten Quantisierungsintervalle QI2 nicht identisch lang.

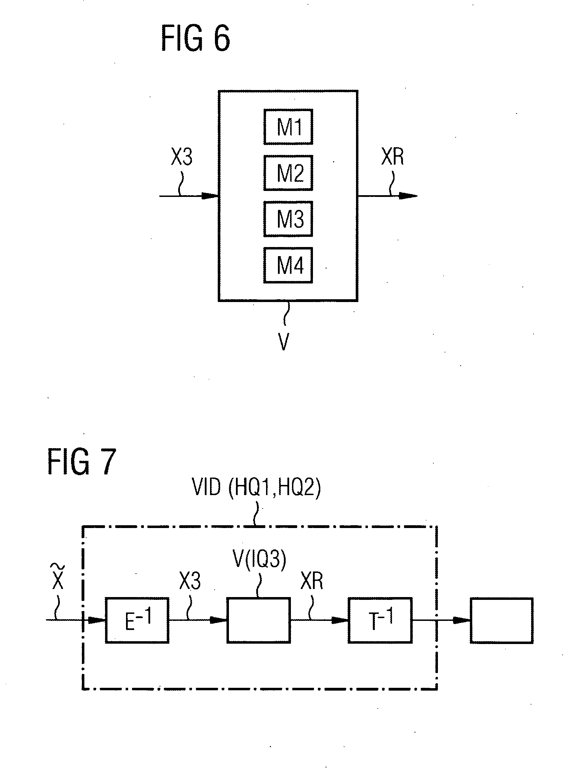

In Figur 6 ist die erfindungsgemäße Vorrichtung zur Durchführung des erfindungsgemäßen Verfahrens abgebildet. Der dritte Zwischendatenwert X3, welcher aufgrund der ersten bzw. zweiten Quantisierung erzeugt worden ist, wird der Vorrichtung V zugeführt. In der Vorrichtung V werden mit einem ersten Mittel M1 durch Verschieben der Intervallgrenzen der zweiten Quantisierungsintervalle QI2 jeweils zu den nächstgelegenen Intervallgrenzen der ersten Quantisierungsintervalle QI1 dritte Quantisierungsintervalle QI3 generiert. Ferner werden mit Hilfe eines zweiten Mittels M2 für die dritten Quantisierungsintervalle QI3 die jeweiligen dritten Rekonstruktionswerte R3 derart festgelegt, dass sich der dritte Rekonstruktionswert R3 innerhalb des dazugehörigen dritten Quantisierungsintervalls QI3, zum Beispiel in der Mitte des jeweiligen dritten Quantisierungsintervalls QI3, befindet. Anschließend wird durch ein drittes Mittel M3 der Vorrichtung V der korrigierte Datenwert XR durch eine dritte inverse Quantisierung IQ3 des dritten Zwischenwertes bzw. des quantisierten Datenwertes X3 generiert, wobei die dritte inverse Quantisierung IQ3 durch die dritten Quantisierungsintervalle QI3 mit den dazugehörigen dritten Rekonstruktionswerten R3 repräsentiert wird.

Die durch das erste und das zweite Mittel M1, M2 durchgeführten Verarbeitungsschritte werden beispielsweise nur ein einziges Mal bei einer Initialisierung der Vorrichtung V ausgeführt. Dagegen wird ein weiterer Verarbeitungsschritt, durchgeführt durch das dritte Mittel M3, bei jedem neuen quantisierten Datenwert X3 angewandt. Die Vorrichtung V liefert am Ausgang jeweils einen korrigierten Datenwert XR pro quantisiertem Datenwert X3. Mit Hilfe eines vierten Mittels M4 können Erweiterungen des erfindungsgemäßen Verfahrens implementiert und ausgeführt werden.

Die erfindungsgemäße Vorrichtung bzw. das erfindungsgemäße Verfahren kann im Rahmen eines Standbilddecodierverfahrens VID benutzt werden. Dies ist in Figur 7 gezeigt. Dabei wird der codierte Datenwert $\tilde{X}$ einer inversen

Entropiecodierung $E^{-1}$ zugeführt. Hieraus ergibt sich der quantisierte Datenwert X3, der bspw. einen Spektralkoeffizienten repräsentiert. Die Vorrichtung V führt das erfindungsgemäße Verfahren aus und erzeugt den korrigierten Datenwert XR, der im Rahmen des Standbilddecodierverfahrens VID weiterverarbeitet wird, z.B. mittels einer inversen Transformation $T^{-1}$. Das durch das Standbilddecodierverfahrens VID rekonstruierte Bild kann abschließend auf einem Bildschirm D wiedergegeben. In dem vorgestellten Beispiel gemäß Figur 7 entspricht der quantisierte Datenwert X3 einem innerhalb eines 8x8 Bildblocks codiertem Spektralkoeffizienten innerhalb eines beispielsweise nach JPEG-Standard (JPEG - Joint Picture Expert Group) codiertem Bild. Die Vorgehensweise gemäß Figur 7 kann auch in einem Videodecodierverfahren anwendbar werden, wobei nur diejenigen quantisierten Datenwerte X3 mit Hilfe der erfindungsgemäßen Vorrichtung bzw. des erfindungsgemäßen Verfahrens bearbeitet werden, die keiner Prädiktion von anderen Bildpunkten bzw. Bildern zugrunde gelegt werden.

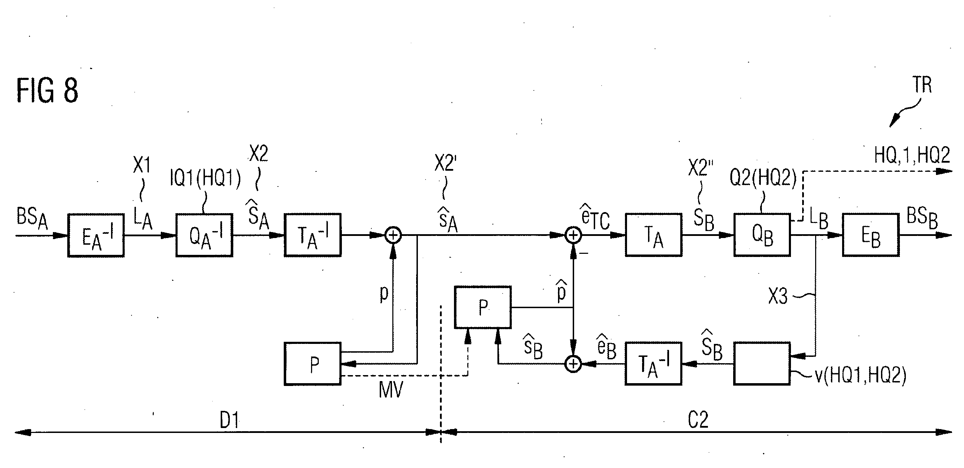

Mit Hilfe von Figur 8 wird der Einsatz des erfindungsgemäßen Verfahrens bzw. der erfindungsgemäßen Vorrichtung im Rahmen eines hybriden Video-Transcoders näher erläutert. Aus einem Entropie-codiertem Datenwert $BS_A$ wird mit Hilfe einer inversen Entropiecodierung $E_A^{-1}$ der ersten Zwischendatenwert X1, $L_A$, aus dem ersten Zwischendatenwert X1 mittels der ersten inversen Quantisierung IQ1, $Q_A^{-1}$ der zweite Zwischenwert X2, $\hat{S}_A$ ermittelt, und der zweite Zwischenwert X2, $\hat{S}_A$ wird der inversen Transformation $T_A^{-1}$ unterzogen. Zu dem hieraus gewonnenen Datenwert wird ein Prädiktor P aus einem der vorangegangenen Bilder addiert, wodurch sich ein modifizierter zweiten Zwischenwert X2' ergibt. Dieser Prädiktor P ist 0 im Falle von nicht prädizierten (Intra-)Bildern. Es wird zusätzlich zu Bewegungsvektoren MV eine Information über die verwendete erste Quantisiererstufenhöhe HQ1 der ersten Quantisierung Q1 an den Coder B übergeben (nicht gezeichnet).

Zur Generierung des dritten Zwischendatenwertes X3 wird eine Anordnung des zweiten Coders C2 gemäß Figur 8 verwendet. Eine derartige Anordnung ist einem Fachmann beispielsweise aus dem Videocodierstandard H.263 oder H.264 bekannt. Nach einer optionalen Subtraktion eines durch einen Prädiktor aus einem der vorangegangenen Bilder bestimmten Datenwertes von dem modifizierten zweiten Zwischendatenwert X2' wird dieser subtrahierte Datenwert $\hat{e}_{TC}$ mit Hilfe einer Transformation $T_A$ in einen transformierten zweiten Zwischenwert X2'', $S_B$' dieser transformierte zweite Zwischenwert X2" unter Verwendung der zweiten Quantisierung Q2, $Q_B$ in den quantisierten Datenwert X3, $L_B$ und dieser mittels einer Entropiecodierung $E_B$ zu einem codierten Endwert $BS_B$ codiert. Die zweite Quantisierung Q2 hat die zweite Quantisiererstufenhöhe HQ2. Wie in Figur 8 zusehen ist, wird das erfindungsgemäße Verfahren auf einer identischen Datenbasis durchgeführt, z.B. auf transformierten Datenwerten. Dies bedeutet, dass der zweite Datenwert X2 invers transformiert und vor der zweiten Quantisierung Q2 wieder transformiert wird. Um auf die identische Datenbasis zu gelangen sind die Transformation $T_A$ und die inverse Transformation $T_A^{-1}$ invers zueinander.

In der Rückkoppelschleife des zweiten Coders, die den quantisierten Datenwert X3, $L_B$ nach der zweiten Quantisierung Q2 abgreift, wird an Stelle der sonst im Standard H.263 üblichen inversen zweiten Quantisierung die erfindungsgemäße Vorrichtung V eingebracht. Diese, unter Berücksichtigung der ersten und zweiten Quantisierstufenhöhe HQ1, HQ2, errechnet einen invers quantisierten Wert $\hat{S}_B$, welcher für die weitere Codierung, z.B. die inverse Transformation $T_A^{-1}$, eingesetzt wird.

In diesem Ausführungsbeispiel gemäß Figur 8 wird in der Rückkoppelschleife die erfindungsgemäße Vorrichtung bzw. das erfindungsgemäße Verfahren benutzt. Um zu gewährleisten, dass der zweite Decoder D2, z.B. integriert in einem Endgerät (nicht dargestellt), eine fehlerfreie Decodierung der quantisierten Datenwerte X3 bewerkstelligen kann, werden die Quantisiererstufenhöhen HQ1, HQ2 der ersten und zweiten Quantisierung Q1, Q2 bspw. an den zweiten Decoder D2 übertragen.

Mit Hilfe von Figur 5 wird im Folgenden die erzielte Verbesserung der Bildqualität durch Verwendung des erfindungsgemäßen Verfahrens näher erläutert. Figur 5 zeigt, wie bereits in Figur 2 näher erläutert, die erste und zweite Referenzkurve R1, R2. Die zwei mit "x" und "*" gekennzeichneten Kurven XR, R* stellen die Bildqualität bei Verwendung des erfindungsgemäßen Verfahrens dar. Wird das erfindungsgemäße Verfahren lediglich an einem Decoder eingesetzt (Variante 2), wie z.B. mit Hilfe von Figur 7 erläutert, so ergibt sich die zweite Kurve XR mit "x". Diese Variante 2 zeigt eine deutliche Verbesserung gegenüber der zweiten Referenzkurve R2. Wird zusätzlich das erfindungsgemäße Verfahren in einer Transcodiereinheit, wie beispielsweise mit Hilfe von Figur 8 näher erläutert, ausgeführt (Variante 1), so kann eine weitere Qualitätsverbesserung erzielt werden. Dies ist in Figur 5 anhand der in der ersten Kurve R* mit "*" zu sehen.

In einer Erweiterung des erfindungsgemäßen Verfahrens kann der dritte Rekonstruktionswert R3 des dritten Quantisierungsintervalls QI3 aus mindestens einem derjenigen ersten Rekonstruktionswerte R1 der jeweiligen ersten Quantisierungsintervalle generiert werden, die sich innerhalb des betrachteten dritten Quantisierungsintervalls QI3 befinden. Zur näheren Erläuterung wird auf Figur 4 verwiesen. Werden die ersten und dritten Quantisierungsintervalle QI1, QI3 auf der linken Bildseite von Figur 4 betrachtet, so ist die jeweilige Intervallgrenze des ersten und dritten Quantisierungsintervalls QI1, QI33 identisch. Zur Ermittlung des dritten Rekonstruktionswertes R3 dieses dritten Quantisierungsintervalls QI3 kann beispielsweise der dritte Rekonstruktionswert R3 identisch zum ersten Rekonstruktionswert R1 gewählt werden.

Dagegen umfasst das rechte dritte Quantisierungsintervall QI3 in Figur 4 zwei erste Quantisierungsintervalle QI1. Zur Bestimmung eines dritten Rekonstruktionswertes R3 für dieses dritte Quantisierungsintervall QI3 kann entweder einer der beiden ersten Rekonstruktionswerte R13, R14 der beiden rechten Quantisierungsintervalle QI1 ausgwählt werden. In einer alternativen Ausführung dazu kann der dritte Rekonstruktionswert R3 aus einer Kombination der beiden ersten Rekonstruktionswerte R13, R14 gebildet werden. Beispielsweise wird durch einen gewichteten Mittelwert der dritte Rekonstruktionswert R3 ermittelt. Formal lautet dies beispielsweise:

$$R3 = 0{,}5 * (R13 + R14) = 0{,}5 * (240 + 208) = 224$$

Die Werte für R13 = 208 und R14 = 240 wurden aus Figur 3 entnommen. Wie Figur 3 außerdem entnehmbar ist, ergibt sich R3 = 224. An Stelle einer Mittelwertbildung kann jeder der ersten Rekonstruktionswerte R1 mit einem eigenen Faktor beaufschlagt werden, und durch Addition der gewichteten ersten Rekonstruktionswerte R13, R14 der dritte Rekonstruktionswert R3 bestimmt werden.

In einer alternativen Erweiterung des erfindungsgemäßen Verfahrens werden die dritten Rekonstruktionswerte jedes dritten Quantisierungsintervalls derart generiert, dass der dritte Rekonstruktionswert R3 einem Wert mit einer höchsten Auftrittswahrscheinlichkeit innerhalb des dazugehörigen dritten Quantisierungsintervalls QI3 entspricht.

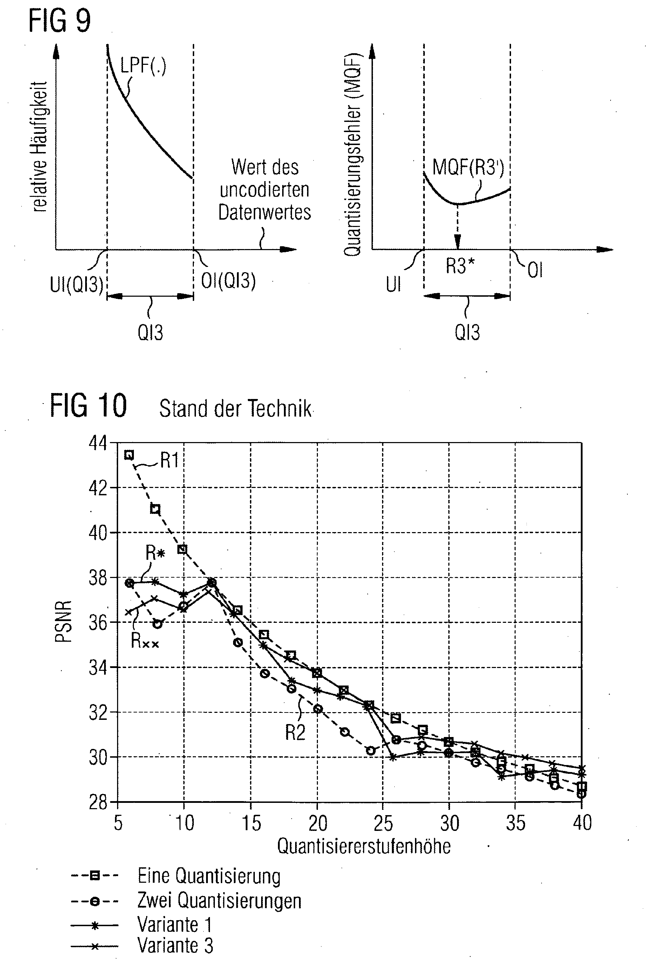

Des weiteren kann der dritte Rekonstruktionswert R3, wie anhand von Figur 9 näher ausgeführt wird, aufgrund einer relativen Häufigkeit für ein Auftreten eines Wertes eines Datenwertes, beispielsweise des uncodierten Datenwertes X0, und des zu dem jeweiligen Wert dazugehörigen Quantisierungsfehlers ermittelt werden. Auf der linken Bildhälfte von Figur 9 ist eine relative Häufigkeit LPF(.) für das Auftreten eines Wertes eines uncodierten Datenwertes für ein ausgewähltes drittes Quantisierungsintervall QI3 dargestellt. Wird ein mittlerer Quantisierungsfehler MQF für das ausgewählte dritte Quantisierungsintervall QI3 errechnet, so kann der dritte Rekonstruktionswert R3* an die Stelle innerhalb des dritten Quantisierungsintervalls QI3 gesetzt werden, der den kleinsten mittleren Quantisierungsfehler MQF ergibt. Der mittlere Quantisierungsfehler MQF für jeden möglichen Wert R3' eines Datenwertes innerhalb des betrachteten dritten Quantisierungsintervalls QI3 wird bspw. durch folgende Gleichung ermittelt:

$$MQF(R3') = \int_{i=UI(QI3)}^{OI(QI3)} \left[ LPF(i) * (R3'-i)^2 \right] \quad , \qquad (1)$$

wobei die untere Intervallgrenze UI und die obere Intervallgrenze OI ist, und durch den Term $(R3'-i)^2$ der quadratische (Quantisierungs-)Fehler wiedergeben wird. Ferner nimmt der Wert R3' Werte zwischen der unteren und der oberen Intervallgrenze UI, OI an. Werden nur diskrete Werte verwendet, so wird in Gleichung (1) aus dem Integral eine Summation.

In einem nachfolgenden Schritt werden die mittleren Quantisierungsfehler MQF in Abhängigkeit von dem Wert R3' analysiert, siehe z.B. den rechten Graphen der Figur 9, und derjenige Wert R3' für den dritten Rekonstruktionswert R3* gewählt, der den kleinsten mittleren Quantisierungsfehler MQF ergibt. Dieser Schritt lautet mathematisch:

$$R3* = \min \left[ MQF(R3') \right] \qquad\qquad (2)$$

Dem Fachmann sind neben dieser Vorgehensweise noch weitere Alternativen zur Ermittlung des kleinsten mittleren Quantisierungsfehler MQF bekannt, wie z.B. anstelle des mittleren quadratischen Quantisierungsfehlers$(R3'-i)^2$ den Quantisierungsfehler durch Betragsbildung $|R3'-i|$ zu ermitteln.

An Stelle der Verwendung einer durch Messung der uncodierten Datenwerte X0 ermittelten relativen Häufigkeit LPF, kann auch eine vorgegebene Statistik benutzt werden. Eine gute Approximation für eine relative Häufigkeit LPF für uncodierte Datenwerte X0 ergibt sich unter der Verwendung einer Laplace-Funktion bzw. einer Laplace-Verteilung. Eine Laplace-Funktion bzw. Laplace-Verteilung ist dem Fachmann aus dem Stand der Technik bekannt. Die Vorgehensweise zur Ermittlung des kleinsten mittleren Quantisierungsfehlers ist bei Einsatz einer Laplace-Funktion analog zur obigen Ausführung.

Durch Verwendung einer relativen Häufigkeit kann der Quantisierungsfehler weiter reduziert werden. Dazu wird auf Figur 10 verwiesen, in der neben der ersten und zweiten Referenzkurve R1, R2 und der Kurve R* gemäß Variante 1 eine weitere Ergebniskurve Rxx abgebildet ist, die als relative Häufigkeit die Laplace-Verteilung einsetzt (Variante 3). Variante 3 bezieht sich auf den Einsatz des erfindungsgemäßen Verfahrens in dem Transcoder TR und dem zweiten Decoder D2. Wie der Figur 10 entnehmbar ist, wird durch den Einsatz der relativen Häufigkeit zur Bestimmung des dritten Rekonstruktionswertes R3* eine Erhöhung der PSNR und somit eine Verbesserung der Bildqualität bzw. eine Reduktion des Quantisierungsfehlers erzielt. Mit Hilfe des vierten Mittels M4 können Erweiterungen des erfindungsgemäßen Verfahrens, wie z.B. die Verwendung der relativen Häufigkeit zur Ermittlung des dritten Rekonstruktionswertes R3*, implementiert und ausgeführt werden.

In diesem Dokument sind folgende Literaturstellen zitiert:

[1] A. Vetro, Ch. Christopoulos and H. Sun: Video Transcoding Architectures and Techniques: An Overview; IEEE Sig. Proc. Mag., März 2003, S. 18-29

[2] O. H. Werner: Generic Quantiser for Transcoding Hybrid Video; Proc. Pict. Cod. Symp. (PCS), 1997, Berlin

[3] P. A. A. Assuncao and M. Ghanbari: Optimal Transocding of Compressed Video; IEEE Proc. Int. Conf. Imag. Proc. (ICIP), 1997, Vol. 1., Seiten 739-742

[4] W.-N. Lie, M.-L. Tsai und T. C.-I. Lin: Rate-Distortion Optimized DCT-Domain. Video Transcoder For Bit-Rate Reduction of MPEG Video; IEEE, Proc. Int. Conf. Aud. Sp. and Sig. Proc. (ICASSP), 2004, Vol. V., Seiten 969-972

**Patentansprüche**

1. Verfahren zum Korrigieren eines quantisierten Datenwerts (X3), wobei der quantisierte Datenwert (X3) durch eine erste Quantisierung (Q1) eines Eingangsdatenwerts (X0), gefolgt von einer ersten inversen Quantisierung (IQ1) und anschließend durch eine zweite Quantisierung (Q2) erzeugt wird, und eine erste Quantisierung (Q1) erste Quantisierungsintervalle (QI1) und die zweite Quantisierung (Q2) zweite Quantisierungsintervalle (QI2) aufweisen, **dadurch gekennzeichnet, dass**

   a) durch Verschieben von Intervallgrenzen der zweiten Quantisierungsintervalle (QI2) jeweils zu den nächstgelegenen Intervallgrenzen der ersten Quantisierungsintervalle (QI1) dritte Quantisierungsintervalle (QI3) generiert werden,
   b) für die dritten Quantisierungsintervalle (QI3) jeweils ein dritter Rekonstruktionswert (R3) derart festgelegt wird, dass sich der dritte Rekonstruktionswert (R3) innerhalb des dazugehörigen dritten Quantisierungsintervalls (QI3) befindet, wobei eine dritte inverse Quantisierung (IQ3) durch die dritten Quantisierungsintervalle (QI3) mit den dazugehörigen dritten Rekonstruktionswerten (R3) gebildet wird und
   c) ein korrigierter Datenwert (XR) durch die dritte inverse Quantisierung (IQ3) des quantisierten Datenwerts (X3) generiert wird.

2. Verfahren nach Anspruch 1, **dadurch gekennzeichnet, dass** der dritte Rekonstruktionswert (R3) des dritten Quantisierungsintervalls (QI3) aus zumindest einem derjenigen ersten Rekonstruktionswerte (R1) der jeweiligen ersten Quantisierungsintervalle (QI1) generiert wird, die sich innerhalb des betrachteten dritten Quantisierungsintervalls (QI3) befinden.

3. Verfahren nach Anspruch 2, **dadurch gekennzeichnet, dass** der dritte Rekonstruktionswert (R3) durch einen gewichteten Mittelwert aus zwei benachbarten ersten Rekonstruktionswerten (R1) erzeugt wird.

4. Verfahren nach einem der vorhergehenden Ansprüche, **dadurch gekennzeichnet, dass** der dritte Rekonstruktionswert (R3) derart generiert wird, dass sich der dritte Rekonstruktionswert (R3) in der Mitte des dazugehörigen dritten Quantisierungsintervalls (QI3) befindet.

5. Verfahren nach einem der vorhergehenden Ansprüche,

**dadurch gekennzeichnet, dass**
der dritte Rekonstruktionswert (R3) des dritten Quantisierungsintervals (QI3) derart generiert wird, dass auf Basis einer relativen Häufigkeitsverteilung von Datenwerten, insbesondere von Datenwerten (X2) nach der ersten inversen Quantisierung (IQ1), der am häufigst vorkommende Datenwert dem dritten Rekonstruktionswert (R3) zugewiesen wird.

6. Verfahren nach einem der vorhergehenden Ansprüche,
**dadurch gekennzeichnet, dass**
dem dritten Rekonstruktionswert (R3*) des dritten Quantisierungsintervalls (QI3) derjenige Datenwert innerhalb des dritten Quantisierungsintervalls (QI3) zugewiesen wird, der im Mittel den geringsten Quantisierungsfehler unter Berücksichtigung der relativen Häufigkeitsverteilung von Datenwerten erzielt.

7. Verfahren nach einem der vorhergehenden Ansprüche,
**dadurch gekennzeichnet, dass**
die dritte inverse Quantisierung derart ausgeführt wird, dass ein Zwischenwert (X4) durch die zweite inverse Quantisierung (IQ2) des quantisierten Datenwerts (X3) erzeugt und dieser erzeugte Zwischenwert (X4) durch denjenigen dritten Rekonstruktionswert (R3) ersetzt wird, der im selben dritten Quantisierungsintervall (QI3) wie der erzeugte Zwischenwert (X4) liegt.

8. Verfahren nach einem der vorhergehenden Ansprüche, **dadurch gekennzeichnet, dass**
im Rahmen eines Decodierverfahrens, insbesondere eines Bilddecodierverfahrens, das Verfahren zur Korrektur auf diejenigen quantisierten Datenwerte (X3) angewandt wird, die zur Verarbeitung anderer quantisierter Datenwerte unberücksichtigt bleiben.

9. Verfahren nach einem der Ansprüche 1 bis 7,
**dadurch gekennzeichnet, dass**
im Rahmen eines Decodierverfahrens, insbesondere eines Bilddecodierverfahrens, das Verfahren zur Korrektur erst dann auf die quantisierten Datenwerte (X3) angewandt wird, nachdem diese zur Verarbeitung anderer quantisierter Datenwerte unberücksichtigt bleiben.

10. Verfahren nach einem der vorhergehenden Ansprüche,
**dadurch gekennzeichnet, dass**
im Rahmen eines Transcodierverfahrens mit einem ersten Decoder (D1) und einem zweiten Coder (C2) das Verfahren zur Korrektur in einer Rückkoppelschleife des zweiten Coders (C2) eingesetzt wird.

11. Vorrichtung (V) zum Korrigieren eines quantisierten Datenwerts (X3), wobei der quantisierte Datenwert (X3) durch eine erste Quantisierung (Q1) eines Eingangsdatenwerts (X0), gefolgt von einer ersten inversen Quantisierung (IQ1) und anschließend durch eine zweite Quantisierung (Q2) erzeugt wird, und eine erste Quantisierung (Q1) erste Quantisierungsintervalle (QI1) und die zweite Quantisierung (Q2) zweite Quantisierungsintervalle (QI2) aufweisen, insbesondere gemäß einem der vorhergehenden Ansprüche,
**gekennzeichnet durch**

a) ein erstes Mittel (M1), das derart ausgestaltet ist, dass durch Verschieben von Intervallgrenzen der zweiten Quantisierungsintervalle (QI2) jeweils zu den nächstgelegenen Intervallgrenzen der ersten Quantisierungsintervalle (QI1) dritte Quantisierungsintervalle (QI3) generiert werden,
b) ein zweites Mittel (M2), das derart ausgestaltet ist, dass für die dritten Quantisierungsintervalle (QI3) jeweils ein dritter Rekonstruktionswert (R3) derart festgelegt wird, dass sich der dritte Rekonstruktionswert (R3) innerhalb des dazugehörigen dritten Quantisierungsintervalls (QI3) befindet, wobei eine dritte inverse Quantisierung (IQ3) durch die dritten Quantisierungsintervalle (QI3) mit den dazugehörigen dritten Rekonstruktionswerten (R3) gebildet wird und
c) ein drittes Mittel (M3), das derart ausgestaltet ist, dass ein korrigierter Datenwert (XR) **durch** die dritte inverse Quantisierung (IQ3) des quantisierten Datenwerts (X3) generiert wird.

12. Vorrichtung (V) nach Anspruch 11,

**gekennzeichnet durch**

ein viertes Mittel (M4), welches derart ausgestaltet ist, dass das vierte Mittel (M4) Erweiterungen des erfindungsgemäßen Verfahrens, nach einem der Ansprüche 2 bis 10, ausführt.

**Claims**

1. Method for correcting a quantised data value (X3),
   wherein the quantised data value (X3) is generated by a first quantisation (Q1) of an input data value (X0), followed by a first inverse quantisation (IQ1) and subsequently by a second quantisation (Q2), and a first quantisation (Q1) features first quantisation intervals (QI1) and the second quantisation (Q2) second quantisation intervals (QI2),
   **characterised in that**

   a) by shifting interval boundaries of each of the second quantisation intervals (QI2) to the nearest-located interval boundaries of the first quantisation intervals (QI1), third quantisation intervals (QI3) are generated,
   b) for each of the third quantisation intervals (QI3) a third reconstruction value (R3) is established in such a way that the third reconstruction value (R3) is located within the associated third quantisation interval, wherein a third inverse quantisation (IQ3) is generated by the third quantisation intervals (QI3) with the associated third reconstruction values (R3) and
   c) a corrected data value (XR) is generated by the third inverse quantisation (IQ3) of the quantised data value (X3).

2. Method according to claim 1,
   **characterised in that**
   the third reconstruction value (R3) of the third quantisation interval (QI3) is generated from at least one of those first reconstruction values (R1) of the respective first quantisation intervals (QI1) which are located within the observed third quantisation interval (QI3).

3. Method according to claim 2,
   **characterised in that**
   the third reconstruction value (R3) is generated by a weighted mean value from two neighbouring first reconstruction values (R1).

4. Method according to one of the preceding claims,
   **characterised in that**
   the third reconstruction value (R3) is generated in such a way that the third reconstruction value (R3) is located in the middle of the associated third quantisation interval (QI3).

5. Method according to one of the preceding claims,
   **characterised in that**
   the third reconstruction value (R3) of the third quantisation interval (QI3) is generated in such a way that on the basis of a relative frequency distribution of data values, in particular of data values (X2) according to the first inverse quantisation (IQ1), the data value appearing most frequently is assigned to the third reconstruction value (R3).

6. Method according to one of the preceding claims,
   **characterised in that**
   the third reconstruction value (R3*) of the third quantisation interval (QI3) is allocated a data value within the third quantisation interval (QI3) which on average produces the lowest quantisation error when considering the relative frequency distribution of data values.

7. Method according to one of the preceding claims,
   **characterised in that**
   the third inverse quantisation is carried out in such a way that an intermediate value (X4) is generated by the second inverse quantisation (IQ2) of the quantised data value (X3), and this generated intermediate value (X4) is replaced by that third reconstruction value (R3) which lies in the same third quantisation interval (QI3) as the generated intermediate value (X4).

8. Method according to one of the preceding claims,
   **characterised in that**

within the scope of a decoding method, in particular an image decoding method, the method for correcting is applied to those quantised data values (X3) which remain unconsidered for the processing of other quantised data values.

9. Method according to one of claims 1 to 7,
**characterised in that**
within the scope of a decoding method, in particular an image decoding method, the method for correcting is only applied to the quantised data values (X3) after these remain unconsidered for processing other quantised data values.

10. Method according to one of the preceding claims,
**characterised in that**
within the scope of a transcoder method with a first decoder (D1) and a second coder (C2), the method for correcting is introduced in a feedback loop of the second coder (C2).

11. Device (V) for correcting a quantised data value (X3), wherein the quantised data value (X3) is generated by a first quantisation (Q1) of an input data value (X0), followed by a first inverse quantisation (IQ1) and subsequently by a second quantisation (Q2), and a first quantisation (Q1) features first quantisation intervals (QI1) and the second quantisation (Q2) features second quantisation intervals (QI2), in particular according to one of the preceding claims,
**characterised in that**

a) a first mean (M1), which is generated in such a way that by shifting interval boundaries of each of the second quantisation intervals (QI2) to the nearest-located interval boundaries of the first quantisation intervals (QI1), third quantisation intervals (QI3) are generated,
b) a second mean (M2), which is generated in such a way that for each of the third quantisation intervals (QI3) a third reconstruction value (R3) is established in such a way that the third reconstruction value (R3) is located within the associated third quantisation interval (QI3), wherein a third inverse quantisation (IQ3) is generated by the third quantisation interval (QI3) with the associated third reconstruction values (R3) and
c) a third mean (M3) which is designed in such a way that a corrected data value (XR) is generated by the third inverse quantisation (IQ3) of the quantised data value (X3).

12. Device (V) according to claim 11,
**characterised in that**
a fourth mean (M4), which is designed in such a way that the fourth mean (M4) carries out extensions to the method according to the invention, according to one of claims 2 to 10.

## Revendications

1. Procédé pour la correction d'une valeur de données quantifiée (X3), ladite valeur de données quantifiée (X3) étant produite par une première quantification (Q1) d'une valeur de données d'entrée (X0), suivie d'une première quantification inverse (IQ1) et ensuite par une deuxième quantification (Q2), la première quantification (Q1) comprenant des premiers intervalles de quantification (QI1) et la deuxième quantification (Q2) comprenant des deuxièmes intervalles de quantification (QI2),
**caractérisé en ce que**

a) des troisièmes intervalles de quantification (QI3) sont générés en déplaçant des limites d'intervalles des deuxièmes intervalles de quantification (QI2) chaque fois vers les limites d'intervalles les plus proches des premiers intervalles de quantification (QI1),
b) une troisième valeur de reconstruction (R3) est déterminée pour chacun des troisièmes intervalles de quantification (QI3) de telle manière que la troisième valeur de reconstruction (R3) se trouve à l'intérieur du troisième intervalle de quantification (QI3) associé, une troisième quantification inverse (IQ3) étant formée par les troisièmes intervalles de quantification (QI3) contenant les troisièmes valeurs de reconstruction (R3) associées, et
c) une valeur de données corrigée (XR) est générée par la troisième quantification inverse (IQ3) de la valeur de données quantifiée (X3).

2. Procédé selon la revendication 1,
**caractérisé en ce que**
la troisième valeur de reconstruction (R3) du troisième intervalle de quantification (QI3) est générée à partir d'au moins une des premières valeurs de reconstruction (R1) des premiers intervalles de quantification (QI1) correspondants, qui se trouvent à l'intérieur du troisième intervalle de quantification (QI3) considéré.

3. Procédé selon la revendication 2,
   **caractérisé en ce que**
   la troisième valeur de reconstruction (R3) est produite par une moyenne pondérée de deux premières valeurs de reconstruction (R1) voisines.

4. Procédé selon l'une des revendications précédentes,
   **caractérisé en ce que**
   la troisième valeur de reconstruction (R3) est générée de telle manière que la troisième valeur de reconstruction (R3) se trouve au milieu du troisième intervalle de quantification (QI3) associé.

5. Procédé selon l'une des revendications précédentes,
   **caractérisé en ce que**
   la troisième valeur de reconstruction (R3) du troisième intervalle de quantification (QI3) est générée de telle manière que sur la base d'une distribution de fréquence relative de valeurs de données, en particulier de valeurs de données (X2) après la première quantification inverse (IQ1), la valeur de données apparaissant le plus fréquemment est assignée à la troisième valeur de reconstruction (R3).

6. Procédé selon l'une des revendications précédentes,
   **caractérisé en ce que**
   la troisième valeur de reconstruction (R3*) du troisième intervalle de quantification (QI3) se voit assigner la valeur de données à l'intérieur du troisième intervalle de quantification (QI3), qui aboutit en moyenne à la plus petite erreur de quantification compte tenu de ladite distribution de fréquence relative de valeurs de données.

7. Procédé selon l'une des revendications précédentes,
   **caractérisé en ce que**
   la troisième quantification inverse est opérée de telle manière qu'une valeur intermédiaire (X4) est générée par la deuxième quantification inverse (IQ2) de la valeur de données quantifiée (X3) et cette valeur intermédiaire générée (X4) est remplacée par la troisième valeur de reconstruction (R3), qui est située dans le même troisième intervalle de quantification (QI3) que la valeur intermédiaire générée (X4).

8. Procédé selon l'une des revendications précédentes,
   **caractérisé en ce que**
   dans le cadre d'un procédé de décodage, en particulier d'un procédé de décodage d'images, le procédé de correction est appliqué aux valeurs de données quantifiées (X3) qui ne sont pas prises en compte en vue du traitement d'autres valeurs de données quantifiées.

9. Procédé selon l'une des revendications 1 à 7,
   **caractérisé en ce que**
   dans le cadre d'un procédé de décodage, en particulier d'un procédé de décodage d'images, le procédé de correction n'est appliqué aux valeurs de données quantifiées (X3) que lorsque celles-ci n'auront pas été prises en compte en vue du traitement d'autres valeurs de données quantifiées.

10. Procédé selon l'une des revendications précédentes,
    **caractérisé en ce que**
    dans le cadre d'un procédé de transcodage au moyen d'un premier décodeur (D1) et d'un deuxième codeur (C2), le procédé de correction est utilisé dans une boucle de rétroaction du deuxième codeur (C2).

11. Dispositif (V) pour la correction d'une valeur de données quantifiée (X3), ladite valeur de données quantifiée (X3) étant produite par une première quantification (Q1) d'une valeur de données d'entrée (X0), suivie d'une première quantification inverse (IQ1) et ensuite par une deuxième quantification (Q2), la première quantification (Q1) comprenant des premiers intervalles de quantification (QI1) et la deuxième quantification (Q2) comprenant des deuxièmes intervalles de quantification (QI2), en particulier selon l'une des revendications précédentes,
    **caractérisé par**

    a) un premier moyen (M1), lequel est conçu de telle façon que des troisièmes intervalles de quantification (QI3) sont générés en déplaçant des limites d'intervalles des deuxièmes intervalles de quantification (QI2) chaque fois vers les limites d'intervalles les plus proches des premiers intervalles de quantification (QI1),

b) un deuxième moyen (M2), lequel est conçu de telle façon qu'une troisième valeur de reconstruction (R3) est déterminée pour chacun des troisièmes intervalles de quantification (QI3) de manière que la troisième valeur de reconstruction (R3) se trouve à l'intérieur du troisième intervalle de quantification (QI3) associé, une troisième quantification inverse (IQ3) étant formée par les troisièmes intervalles de quantification (QI3) contenant les troisièmes valeurs de reconstruction (R3) associées, et

c) un troisième moyen (M3), lequel est conçu de telle façon qu'une valeur de données corrigée (XR) est générée par la troisième quantification inverse (IQ3) de la valeur de données quantifiée (X3).

12. Dispositif (V) selon la revendication 11,
**caractérisé par**
un quatrième moyen (M4), lequel est conçu de telle façon que le quatrième moyen (M4) exécute des extensions du procédé selon l'invention, selon l'une des revendications 2 à 10.

# FIG 1   Stand der Technik

C1(Q1)     D1(IQ1)     C2(Q2)     D2(Q2)

x0     x1     x2     x3     x4

TR

# FIG 2   Stand der Technik

PSNR

R1

R2

Quantisiererstufenhöhe

--□-- Eine Quantisierung
--⊖-- Zwei Quantisierungen

EP 1 913 780 B1

# FIG 3

| | | | | | | | |
|---|---|---|---|---|---|---|---|
| QI1 { R1 ~ | 255 / 240 / 224 | 7 | 240 | QI2 { R2 ~ | 255 / 229 | | 255 ~ OI |
| | | | | | | 4 | 224 ~ R3 } QI3 |
| | 223 / 208 / 192 | 6 | 208 | | 204 / 203 | | 192 ~ UI |
| | 191 / 176 / 160 | 5 | 176 | | 178 | 3 | 191 / 176 ~ R3 / 160 |
| R1 ~ | 159 / 144 / 128 | 4 | 144 | | 153 / 152 | | 159 |
| | 127 / 112 / 96 | 3 | 112 | | 127 / 102 | | 128 |
| X0=90 → | 95 / 80 / 64 | X1=2  →2→ | X2=80  80 | X2=80 → | 101 / 76 | X3=1  →1→ | X4= XR=80  96 / 95 / 80 → / 64 |
| | 63 / 48 / 32 | 1 | 48 | | 51 / 50 | 0 | 63 |
| QI1 { R1 ~ | 31 / 16 / 0 | 0 | 16 | QI2 { R2 ~ | 25 / 0 | | 32 ~ R3 } QI3  16 |

X0=90 → [Q1] → X1=2 → [IQ1] → X2=80 → [Q2] → X3=1 → [IQ3] → X4=XR=80

# FIG 4

QI2                 QI1

R1     R1    R1,R13   R1,R14

R2       R2        R2

R3      R3       R3

QI3        QI3         QI3

# FIG 5

PSNR vs. Quantisiererstufenhöhe

Legend:
- – –□– – Eine Quantisierung
- – –o– – Zwei Quantisierungen
- —✳— Variante 1
- —✕— Variante 2

## FIG 6

X3

M1

M2

M3

M4

XR

V

## FIG 7

VID (HQ1,HQ2)

$\tilde{X}$

$E^{-1}$

X3

V(IQ3)

XR

$T^{-1}$

# FIG 8

EP 1 913 780 B1

## FIG 9

relative Häufigkeit

LPF(.)

Wert des uncodierten Datenwertes

UI(QI3)    OI(QI3)

QI3

Quantisierungsfehler (MQF)

MQF(R3')

UI    R3*    OI

QI3

## FIG 10    Stand der Technik

PSNR

R1

R*

R××

R2

Quantisiererstufenhöhe

--□--  Eine Quantisierung
--⊖--  Zwei Quantisierungen
—*—   Variante 1
—×—   Variante 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Sorial H et al.** Selective requantization for transcoding of MPEG compressed video. *MULTIMEDIA AND EXPO, 2000. ICME 2000. 2000 IEEE INTERNATIONAL CONFERENCE ON NEW YORK,* 30. Juli 2000, 217-220
- **A. Vetro ; Ch. Christopoulos ; H. Sun.** Video Transcoding Architectures and Techniques: An Overview. *IEEE Sig. Proc. Mag.,* Marz 2003, 18-29
- **O. H. Werner.** Generic Quantiser for Transcoding Hybrid Video. *Proc. Pict. Cod. Symp. (PCS),* 1997
- **P. A. A. Assuncao ; M. Ghanbari.** Optimal Transocding of Compressed Video. *IEEE Proc. Int. Conf. Imag. Proc. (ICIP),* 1997, vol. 1, 739-742
- **W.-N. Lie ; M.-L. Tsai ; T. C.-I. Lin.** Rate-Distortion Optimized DCT-Domain. Video Transcoder For Bit-Rate Reduction of MPEG Video. *IEEE, Proc. Int. Conf. Aud. Sp. and Sig. Proc. (ICASSP),* 2004, 969-972